# EUROPEAN PATENT SPECIFICATION

(11) **EP 4 596 459 B1**
(45) Date of publication and mention of the grant of the patent: **25.11.2026**
(21) Application number: 24382091.7
(22) Date of filing: 31.01.2024
(51) Int. Cl.: B65G 17/08, B65G 43/02, G01B 21/06

(54) **SYSTEM AND METHOD FOR MONITORING MODULAR CONVEYOR BELTS**
SYSTEM UND VERFAHREN ZUR ÜBERWACHUNG VON MODULAREN FÖRDERBÄNDERN
SYSTÈME ET PROCÉDÉ DE SURVEILLANCE DE BANDES TRANSPORTEUSES MODULAIRES

(43) Date of publication of application: 06.08.2025
(73) Proprietor: Afher Eurobelt, S.A., 47012 Valladolid (ES)
(72) Inventor: Herrero Perez, Carlos, VALLADOLID (ES); San Miguel Nuñez, Javier, VALLADOLID (ES)
(74) Representative: Temiño Ceniceros, Ignacio

(56) References cited:
- DE-A1- 102010 043 057
- US-B2- 11 174 106
- US-B2- 9 896 276

## Description

As indicated in the title of the present specification, the object of the present invention is a system and a method for monitoring modular conveyor belts based on the measurements of their working temperature and of specific times to then calculate, by means of mathematical formulas, a plurality of belt factors at all times when it is in motion.

The present invention falls within the technical field of predictive modular conveyor belt maintenance for determining if the belt is working properly and predicting a malfunction of the system, preventing possible unexpected damage and/or downtimes.

Link-based conveyor belts are made from a thermoplastic material and are widely known in the prior art (as described, by way of example, in patent document EP2990360). One of the most common solutions is the belt in which each link is defined by a planar, and frequently grooved, core, although it can also be closed, depending on the type of application or practical use of the belt. The core of each link generally coincides with the thickness of the belt or with that of at least one of the modules, from the longitudinal edges of which there emerge a series of one-piece protuberances distributed in a staggered pattern on both edges and making the link look like a "dual comb", these protuberances furthermore being perforated to give passage to the hinge pins between links, forming the conveyor belts themselves which are driven by means of sprockets.

When this type of conveyor belt is operating, elongation always occurs due to: (i) the stretching of the links or modules, or the hinge pins, or both; and (ii) the wear resulting from use and operation. These elongations will naturally be affected by the conditions in which the conveyor belt is working at all times, and this thereby leads to the need to have said information in order to know it, process it, and predict possible breakages, stoppages, and to ultimately prolong the service life thereof. In dealing with problems of this type, the solution that is most commonly used in the industry when the belt undergoes elongation, i.e., when the belt "stretches", is to remove rows to reduce the excess belt in the turns of the conveyors, until the belt "gains" a lot of passage and does not engage correctly.

The prior art describes systems configured for measuring the elongation of conveyor belts that measure speed with linear detectors that are separated by a certain distance, of a type using two indications in the conveyor belt and two sensors. Thus, document US5291131 describes an apparatus comprising a chain configured in a closed loop and arranged to move in a circulating path; and a device for measuring the lengthening of the chain comprising a pair of indices or indications on the chain, where said indications are spaced from each other in the direction of movement of the chain; and a pair of sensors, disposed at predetermined positions along the path of the chain for detecting said indices and producing signals as the indices pass said predetermined positions. The device of patent document US5291131 is completed with calculating means, responsive to said signals produced by the sensors, for arithmetically determining the lengthening of said chain on the basis of the distance between said sensors and the time required for each of said indices to pass between both sensors.

Patent document EP1464919 describes a method for automatically monitoring the wear of a chain when in operation in a chain drive assembly, comprising the steps of applying first and second markers to the chain at a predetermined distance along the length of the chain, positioning a first sensor adjacent to the chain to coincide with the position of the first marker, positioning a second sensor adjacent to the chain to coincide with the position of the second marker, the sensors being capable of generating signals in response to the detection of the proximity of the markers, operating the chain drive assembly so that the first and second sensors are initially triggered substantially and simultaneously by said first and second markers, respectively, detecting the lengthening of the chain by determining when a predetermined time delay occurs between the triggering of the first and the second sensors by the respective markers. Nevertheless, this method is not anticipated for use in belts made of plastic material because the separation of the detectors will depend on the load on the belt. The length of plastic, for example, changes depending on the belt temperature. Plastic is a resilient elastic material which makes it impossible to simultaneously synchronise a plurality of sensors.

Compared to the previous patent documents, document ES2566627T3 which proposes a monitoring system for a conveyor of articles with a single indication in the conveyor belt is known in the prior art. The conveyor of articles comprises a static portion and at least one corresponding endless conveyor adapted to move with respect to the static portion when the conveyor of articles is in operation. The system includes a reference element located on the transport chain, a first sensor integrated in the static portion and a second sensor integrated in the static portion. Said first and second sensors are separated from each other by a first distance; each sensor is configured to detect the passage of the reference element close to the sensor itself during the operation of the conveyor. The system further includes counting means coupled to the sensors and configured to measure a first time corresponding to the time elapsed between the first passage of the reference element close to the first sensor and passage of the reference element close to the second sensor. The counting means are further configured to measure a second time corresponding to the time elapsed between the first passage of the reference element close to the first sensor and a second passage of the reference element close to the first sensor, or the time elapsed between the first passage of the reference element close to the second sensor and passage of the reference element close to the second sensor. Said second passage is subsequent to the first passage. The system further comprises computing means configured to determine the transport chain movement speed with respect to the static portion based on the first measured time and the first distance, and determining the length of the chain based on the determined movement speed and the second measured time.

Patent documents US5291131, ES2566627T3 and EP1464919 generally describe systems with a single reference element, i.e., systems that only perform one measurement for each turn of the conveyor belt, wherein the reference element is placed on the conveyor belt to measure the speed thereof by means of two sensors placed at a previously fixed distance that detect the indication as it passes. The elongation in a complete turn is then calculated, using said speed and those same sensors with a simple mathematical formula of speed/time between measurements. In other words, it is a system that measures the elongation of the entire conveyor belt, i.e., the sum of all the modules, and not of each of them separately, as would be desirable. These systems have the drawback of being systems that describe measurements depending on the length and speed of the conveyor, where the response may be very long and cannot be used for its main purpose, which is to prevent possible problems in the belt with enough time in advance. Thus, for example, for a conveyor having 30 metres between shafts and moving at a speed of 0.5 metres/minute, such as in a conventional cooling line, the elongation of the passage would be measured every hour, meaning that everything that occurred during said period of time is unknown, where this time is too long and therefore inoperative. Furthermore, another obvious drawback of these systems is that they do not analyse each of the passages, so malformations in a specific area cannot be detected. In these systems, after detecting the problem, it would be necessary to analyse point-by-point where the problem is.

The previous patent documents (US5291131, ES2566627T3 and EP1464919) describe systems with a single reference element, i.e., measurement is performed only once per turn, regardless of the presence of two indications on the belt, like in patent documents US5291131 and EP1464919. In these two documents, the elongation between those two indications is measured only once per turn, and just with that, an extrapolation is performed to conclude that the belt has been elongated accordingly, committing a serious extrapolation error because they will never be able to detect if there is a problem in another segment of the belt since they only analyse that part of the belt, and furthermore only perform one measurement per turn. However, in the patent document ES2566627T3, the problem lies in measuring the passage of a complete turn and performing extrapolation for all the passages. These solutions based on the extrapolation of calculations present the added problem of the frequent removal of a row in modular belts so that there is more tension when the belt stretches, so all the calculations that are programmed for calculating the elongation would be disrupted.

On the other hand, patent document GB2406844 describes an apparatus for monitoring chain elongation to automatically control the lengthening thereof when in operation in a chain drive assembly, the apparatus comprising: a first sensor and a second sensor, where both sensors are mounted on a stationary support at a predetermined fixed distance and configured for generating electrical signals in response to the detection of at least first and second markers attached to the chain, the markers being disposed initially at a predetermined distance; a control unit connected to said sensors so as to receive the signals from said sensors; and the control unit comprising a timer that is triggered upon receiving said signals from said sensors so as to measure the elapsed time between receipt of signals from the sensors; the control unit being configured to measure a first elapsed time value between signals generated by one of the markers passing between the first and second sensors and to determine the speed of travel of the chain from a first elapsed time value and a value of the predetermined distance between the sensors; the control unit also being configured so as to measure a second elapsed time value between the signals generated by the first marker passing one of said sensors and the second marker passing one of the sensors; the control unit incorporating means for calculating the distance between the markers from the determined speed of travel of the chain and the first and second elapsed time values, means for calculating the lengthening of the chain by deducing the predetermined distance between the markers from the calculated distance between the markers, and means for comparing the calculated lengthening with a predetermined threshold value; and an alarm signal generator connected to the control unit and for issuing an alarm signal if the calculated lengthening exceeds said threshold value.

Placing an indication or a reference element in each module could be considered to be sufficient to solve the technical problem of measuring the elongation in each of the modules of the belt instead of the entire belt. Nevertheless, in the solution proposed in patent document GB2406844, in that case, the distance between the linear receivers (i.e., the sensors) must be smaller than the passage of the chain so as not to get the consecutive signals mixed up or confused, and taking into account that it can be operated in sectors in which the chains may have very small passages (even smaller than 8 mm), it would be practically impossible to operate with systems of this type, since there is no space between measurements, making the correct calculation of the speed of the belt, and therefore of the hypothetical elongation, unviable in practice. Therefore, there is a need for a system that can measure the elongation of the belt based on the calculation of the elongation of each of the modules making up the modular conveyor belt with respect to the calculation of the complete elongation of the belt.

Patent document EP1850087 describes a method for controlling the elongation of a revolving drive chain that engages with a rotating sprocket that increases measurement precision. More specifically, it describes a method for monitoring the elongation of a revolving metal drive chain that engages with a rotating sprocket and has identical chain elements which are regularly arranged over the length of the chain. This method comprises: (a) the use of a first fixed sensor for detecting the passage movement of the chain elements; and (b) the use of a second sensor for detecting the rotational movement of the gear by detecting the passage of the teeth of the gear for said second sensor. The method also includes a step for measuring the rotational speed of the chain that is determined by: the rotational movement of the gear that is detected by the second sensor, the distance between two adjacent chain elements that is detected using the first sensor, and the distance between two adjacent chain elements that is detected using the first sensor, taking into account the rotational speed of the chain.

Nevertheless, the method described in patent document EP1850087 is not viable in conveyor belts with links made from thermoplastic materials. This lack of viability is due to the fact that sensors cannot be placed very close to the gears for measuring the angular speed by means of detecting the passage of the teeth because: (a) they are hard to access and the wirings that are always located in the areas with movement are dangerous; (b) the area of the gears is one of the most problematic areas in terms of cleaning and it is therefore the area with the most emphasis, using water and more aggressive cleaning systems on them; (c) due to what has been described in the foregoing point and to the accumulation of product and waste in that area, particles may appear between the sensor and the teeth of the gear, preventing measurement or causing a false measurement; (d) in plastic conveyor belts, only the central gear which is the one guiding the conveyor belt is retained, the others move in the shaft due to the changes in temperature and to expansions and shrinkages thereof, therefore it would be impossible to place the sensors in those moving gears, and they must therefore be installed in the central gear, making it difficult to bring the installation and wiring thereto; (e) furthermore, since the sensors must be positioned as close as possible to the tooth of the gear, vibrations will be transmitted, meaning erroneous and false signals may be received; (f) due to their own weight and the loads they support, movements that are not perfect circumferences occur due to the deflection of the shaft, which movements will also generate erroneous and false signals; (g) the gears used are made of plastic and the teeth wear away gradually, causing poor detection.

All these factors will make the reading of the sensor placed in the gears and proposed in the method of patent document EP1850087 inoperative with plastic modular belts.

In conclusion, plastic modular conveyor belts exhibit elongations due to, among other reasons: (a) the working temperature; in general, since they are plastic materials, changes in temperature tend to significantly affect their thermal and mechanical properties which in turn cause changes in the passage of the conveyor belt as it stretches and shrinks with those changes; (b) the stretching of the modules forming it; said modules are generally made from plastic materials, so lengthenings caused by wear and applied loads which lead to changes of said passage occur; (c) the stretching of the hinge thereof; said hinges may be part of the modules (rodless belts) or different components (with a rod); in this second case, they are usually also made from plastic materials, so lengthenings which also lead to changes of said passage occur; (d) the module-hinge assembly, as a result of the operation and use thereof, undergoes wear mainly caused by rotating about itself and the applied load, which in turn lead to changes of said passage; (e) the operation and exposure to tensile stresses or tension with load, causing stretching and modifications of their mechanical properties; and (f) operation in circular movements, i.e., the belt rotates about itself as it passes the gears, causing continuous friction of their hinges (with or without a hinge rod), and thereby causing wear and elongation that will be greater and quicker at higher speeds.

Therefore, there is a need for a system and a method that allows correctly calculating the elongation in modular conveyor belts formed by modules or links made of a thermoplastic material.

Document DE102010043057 discloses a system according to the preamble of claim 1 for determining and compensating a lengthening of a transport element, for example, for a conveyor transporting a container in order to determine the position of the container more precisely. The apparatus has readable section marks and a start mark arranged at an endless drive element, i.e., a link chain, that is subject to lengthening in operation. The section marks are distributed along the drive element, and a transmitter generates displacement increments synchronous with movement of the drive element. Stationary mark readers generate transit signs. A processor unit calculates the lengthening in sections between the section marks and/or in the drive element based on processing of the displacement increments and the transit signals. The transmitter is formed as a rotary sensor.

Document WO20181488014 describes apparatus and methods for determining belt speed and passage using correlation techniques. The apparatus includes a pair of rangefinders separated by a predetermined distance. Each of the rangefinders measures the distance to the belt at two positions separated from each other in the direction of belt travel. The apparatus creates at least one time-series profile record corresponding to the profile of a belt. A processor uses the time delays between occurrences of a regularly spaced topographical feature in the belt profile to calculate the belt passage and speed. Correlation techniques are used to obtain robust results.

Document DE102005037117 describes a conveyor belt monitoring system capable of detecting not only longitudinal tearing of a conveyor belt, but also an abnormally high temperature or the like as a symptom of longitudinal tearing, and thus having the function of preventing longitudinal tearing in advance. To this end, this document describes transponders and measurement means configured to measure the temperature or the pressure of a conveyor belt and which are continuously installed on a portion of the surface layer of the conveyor belt with a predetermined space therebetween to transmit self-identification information and the value measured by obtaining energy without contact. A transmitter-receiver is installed in a predetermined fixed position separated from the conveyor belt by a predetermined distance to supply the electromagnetic energy to the transponders and the measurement means and to receive the radio wave with the self-identification information and the measured values on it from the transponders and the measurement means.

Document US2023174315 describes a system and method for measuring the lengthening or stretch of a modular plastic conveyor belt. The belt-stretch measuring system measures stretch as the ratio less one of an actual belt travel distance or actual belt speed to an expected belt travel distance or expected belt speed for a new, unstretched belt. The sensors measure the actual belt distances or actual belt speeds. The expected belt travel distances or expected belt speeds are calculated from the pulse outputs of encoders measuring the rotation of sprockets engaging the conveyor belt and from the known number of teeth on the sprockets. The actual belt passage and catenary sag are also calculated.

Document US9896276 discloses a method and apparatus for automatically and visually monitoring the wear of a continuous conveyor chain without having to stop the conveyor chain. The method and apparatus provide first and second sensors fixedly spaced along the conveyor chain at a predetermined distance and first and second opposing visualization devices oppositely positioned at a point along the conveyor chain. The first and second sensors generate signals corresponding to the presence and absence of successive links provided in the conveyor chain. The generated signals are received and processed, and the necessary time intervals are calculated for providing an output indicative of chain wear of any portion of the chain. Several parameters of chain wear may be calculated, including chain stretch and instantaneous chain speed. The first and second visualization devices capture visual images of each of the links so as to visually inspect and identify any problems associated with the links.

Lastly, patent EP3533734
, disclosing the features of the preamble of claim 1, describes a system for measuring the time of passage of at least one indication located at one end of a rotating shaft, specifically in the motor shaft, outside the product conveyance area, through a sensor placed in a position integral with said shaft, measuring the time of each rotation of the indication in the shaft. Furthermore, the system comprises a plurality of indications, at least one per module of the plastic modular belt; where said indications are located at regular intervals between each of the modules making up the plastic conveyor belt, so that at least one sensor placed on at least one side of the plastic conveyor belt detects the passage of each indication, measuring the time of passage of each indication.

This last document is the closest prior art to the present invention and an objective thereof is to improve measurement precision by using a single sensor instead of the two used in EP3533734, which also naturally results in lower costs.

This object is achieved by the system and the method of the attached claims.

An object of the present invention is to measure the time of passage of at least one indication placed at one end of a rotating shaft, specifically in the drive shaft, outside the product conveyance area, through a sensor placed in a position integral with said shaft, measuring the time of each rotation of the indication in the shaft. Furthermore, the system comprises a plurality of indications, at least one per module of the modular belt, in such a way that said indications are located at regular intervals between each of the modules making up the conveyor belt so that a single sensor placed on a side of the conveyor belt detects the passage of each indication, measuring the time of passage of each indication.

In a particular embodiment of the invention, a step for measuring temperature (by means of a sensor intended for that purpose) is established, where temperature is a parameter required for correctly calculating the stresses and working conditions to which the conveyor belt is exposed at all times, and it would therefore be possible to obtain a system offering information relating to the temperature, linear speed, percentage of resistance allowed vs. used, percentage of load allowed vs. used, prediction of possible gear slips due to excessive load, change in the chain at the end of its service life, the need for preventive maintenance by removing modules from the belt so as to provide more tension and so that the belt works properly, and all this in an immediate manner and so that it works in optimal conditions for prolonging its service life or the established maximum duration.

It must be considered that when placing two sensors at a predetermined distance, this distance must always be the same and not change in any way, since it is the reference. This is quite complicated in industrial processes in general, so the change and/or appearance of erroneous values is very possible. We eliminate that factor by placing a single sensor as in our case. This involves elongation controls of hundredths of a mm, in order to be able to make good projections and analysis of the state of the belt at all times.

Throughout the description and the claims, the word "comprises" and its variants are not intended to exclude other technical features, additions, components or steps. For those skilled in the art, other objects, advantages and features of the invention will be deduced from both the description and the practical use of the invention. The following examples and drawings are provided by way of illustration and are not intended to limit the present invention. Furthermore, the present invention encompasses all possible combinations of particular and preferred embodiments indicated herein, to the extent that they fall within the scope of the claims.

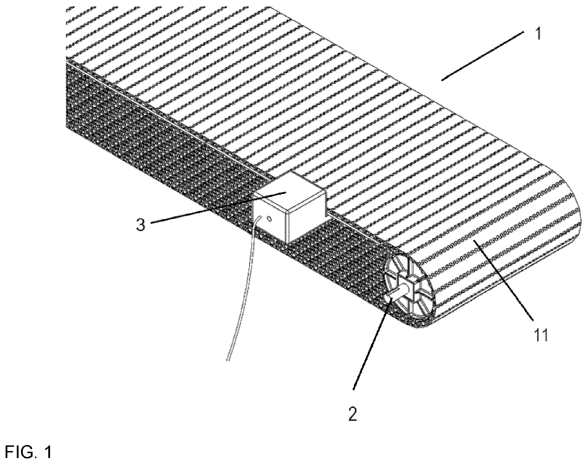

Figure 1 shows a schematic view of a modular conveyor belt implementing the system object of the present invention.
Figure 2 shows a plan view of the passage detecting device (3) for detecting the passage of the conveyor belt (1) of figure 1.
Figure 3 shows an example of the measuring system with a single sensor proposed by the present invention.
Figure 4 shows a bar chart with a typical passage time signal (T_{P}) without elongation.
Figure 5 shows a bar chart with a typical passage time signal (T_{P}) with elongation.
Figure 6 shows an illustrative diagram of the *polygonal effect* on the modular conveyor belts (1) of the invention, where figure 6(A) shows the conveyor belt without the effect, and figure 6(B) shows said effect that occurs when the belt is pulled.

As indicated above, the object of the present invention is to create a control system in conveyor belts 1 for providing immediate information about their behaviour during operation. To that end, the present invention proposes measuring certain specific times for calculating the passage of the conveyor belt 1 when it is in operation for the purpose of assessing the modifications that have occurred and acting accordingly. "Passage" is understood as a reference between two repeating consecutive points that are equidistant from one another along the entire conveyor belt 1, where this reference is a distance that in turn corresponds with the passage between the teeth of the gear 2 driving the modular conveyor belt 1.

Referring to the attached drawings, the system of the invention is configured in a modular conveyor belt 1 comprising a plurality of plastic modules (11, 11', 11", 11"', 11ʺʺ) linked together to form a continuous path operated by a gear 2. In this particular non-limiting embodiment, the modules (11, 11', 11", 11", 11ʺʺ) are defined by a planar core with a thickness that coincides with the thickness of the belt, on the longitudinal edges of which there emerge a plurality of one-piece protuberances distributed in a staggered pattern on both edges, said protuberances being configured to give passage to hinge pins between modules (11, 11', 11", 11"', 11ʺʺ) forming the modular belt 1 itself which is driven by a gear 2 or sprocket.

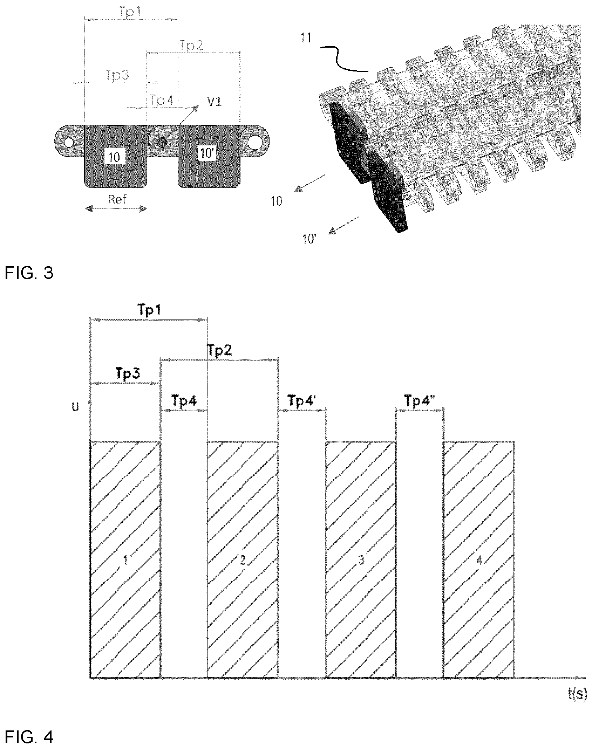

Compared to the system and method described in EP3533734, the present invention comprises a single detection element 3, which comprises a sensor 33 configured to detect the passage of a plurality of reference elements (10, 10', 10", 10"', 10"") preferably placed on one of the sides of each module (11, 11', 11", 11‴, 11ʺʺ) of the modular belt 1, as best seen in figure 3. Preferably, there will be one reference element 10 per module 11. Likewise, it is important to note that not all modules in a belt can incorporate a reference element, and it may be the case, for example, that for every two modules, one will have a reference, and another will not have a reference element.

For ease of notation, unless otherwise indicated, the reference element 10 will be understood as any reference element (10, 10', 10", 10‴, 10"") and module 11 will be understood as any module (11, 11', 11", 11‴, 11ʺʺ) of the modular belt 1. It is important to note that the notation (10, 10', 10", 10"', 10"") or (11, 11', 11", 11‴, 11ʺʺ) indicates that there is a first module 11 with a first reference element 10, followed by a second module 11' with its corresponding second reference element 10', which comes next in the direction of travel of the conveyor belt 1.

The passage detecting device 3 comprises a temperature detector 34 since temperature is a very important factor in studying the behaviour of modular belts 1. The measurement of the working temperature of the modular belt 1, i.e., the measurement at which each of the modules 11 making up the modular belt 1 works, is a value that conditions its operation. The measurement of the working temperature in the room will be an estimate that will usually be sufficient. Therefore, the measurement of the temperature must be performed as close as possible to the modular belt 1 to thereby also estimate that actual temperature. Nevertheless, a temperature sensor 34 can be implemented to obtain an actual measurement of the working temperature of each module 11, obtaining results of the working conditions of the conveyor belt 1 with the temperature that are much more precise.

Compared to the description of EP3533734 and with the detection of temperature, the temporary reference (T_{P}) obtained with a single sensor 33 and the subsequent calculation of the passage at each time, the change in elongation with respect to the nominal measurement and tolerance thereof can be measured, successfully calculating at all times: (a) if the conveyor belt 1 will engage properly upon reaching the gear 2, or otherwise, if it may slip out of engagement, damaging both the surface of the belt 1 and the teeth of the gear 2; (b) if it is exposed to permanent deformations and/or breakages upon reaching, exceeding, or approaching its elastic and/or breaking limit; (c) if it requires any maintenance to give more tension to the system; (d) if it will require replacement in a short period of time; (e) if it is working outside the allowed temperature limits; and even (f) the conveyed load, which is referred to as production in manufacturing processes; (g) the uniformity of the production through the supported loads and the resistance to which the belt is subjected.

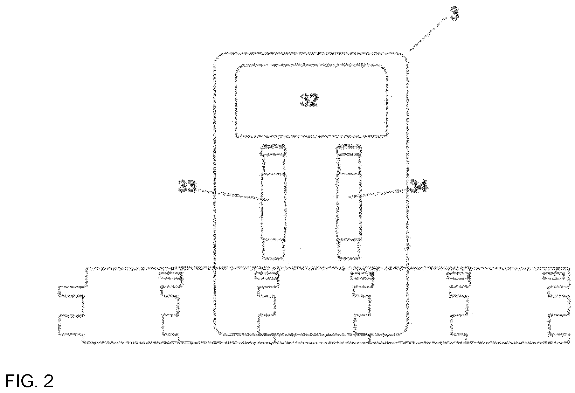

Two detectors are housed in the casing 31 (as best seen in figure 2): (a) a passage detector (33) and (b) a temperature detector (34) connected with a signal processing circuit 32. The object of the passage detector 33 is precisely to detect the passage of the reference elements located on the conveyor belt (in figure 2, the third indication 10" and the fourth indication 10‴, which correspond to the third module 11" and the fourth module 11‴) so that after acquiring the signal from the passage detector 33, the time of passage between consecutive pairs of reference elements is calculated.

In a practical embodiment, the signal processing circuit 32 comprises at least of one receiver-emitter system with an embedded operating system and a memory sufficient for processing and storing, in the form of matrices, the signals received from the passage sensor 33 and the temperature sensor 34 including instructions for: (a) receiving and interpreting the signals; (b) calculating the detection times between consecutive signals T_{P}; (c) storing them preferably in matrices; and (d) delivering all those detection times between reference elements T_{P}, as well as the temperature values at all times to an external server where said data is accessible from remote locations. In a preferred embodiment, the signal processing circuit 32 can be limited to receiving and delivering signals to the external server, without performing any processing (calculation step) that would be carried out on the server itself.

The technology used for the detection of passage and temperature in the passage detector 33 and the temperature detector 34 can be any technology selected from sensors of the following types: inductive, capacitive, laser, optical, magnetic, colour, infrared, radiofrequency, ultrasound, artificial vision or any combination thereof.

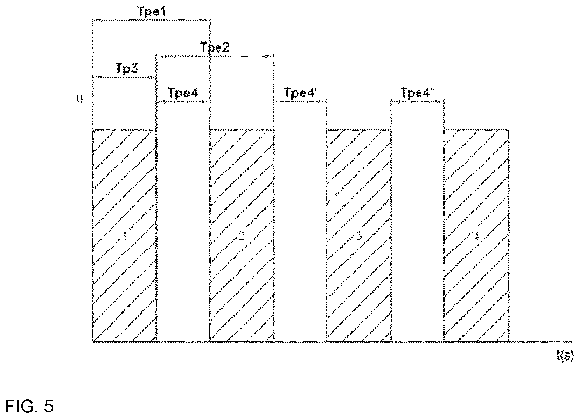

With reference to figure 4, a typical signal with a passage time sequence T_{P1,} T_{P2}, T_{P3}, T_{P4} is described. Over time, a typical signal received where the belt has some elongation or stretching is shown in figure 5, wherein when stretching occurs in the modules and in the connection/hinge rods due to use and the load, T_{Pe1}, T_{Pe2}, T_{Pe4} >T_{P1}, T_{P2}, T_{P4}, respectively.

However, this effect does not occur in the consecutive reference elements 10, 10' of figure 3, which is the reference used by the present invention to measure their passage through the detector device 3, measuring the time of passage T_{P3} to obtain the actual speed of that specific module 11 at that specific moment, and which will essentially coincide with the duration of the pulse or time of change in the detection, i.e., the time of change between detection and nondetection.

The length of the reference element 10, which will be denoted REF, is known and constant, since it does not undergo any change as it is not subjected to stresses, and T_{P3} (constant) is the time of passage of the reference element 10, where the actual speed of the first module 10 is: $S 1 = REF / {T}_{P 3}$

To calculate stretching, the previously calculated speed S1 in that reference element 10 is used, as well as the time of passage T_{P1,} which corresponds to the actual passage of that module 10, considering the stretching of the module 10 itself and the rod V1 and the module that immediately precedes. Similarly, the time of passage T_{P2} corresponds to the actual passage of the next module 10' considering the stretching of that second module 10' and the rod V1. The passage T_{P4} therefore corresponds to the passage of the rod V1, which is the time in which the sensor 33 does not detect any reference element 10.

In short, the passage of each module 10, 10' in figure 3 is established as follows: ${P}_{10} = S 1 x {T}_{P 1}$ ${P}_{10 ′} = S 1 x {T}_{P 2}$

Carrying out the same calculation for successive modules.

In general, there are not many differences between P₁₀ and P_{10'}, although other factors that will be described below must also be considered.

To use suitable comparative elements, the values of T_{P1,} T_{P2}, T_{P3}, T_{P4} with the new belt 1 will be measured, these values being the initial values to subsequently calculate the situation of the belt 1 at all times through the values of T_{Pe1}, T_{Pe2}, T_{Pe3}, T_{Pe4} with the belt 1 working and beginning to elongate.

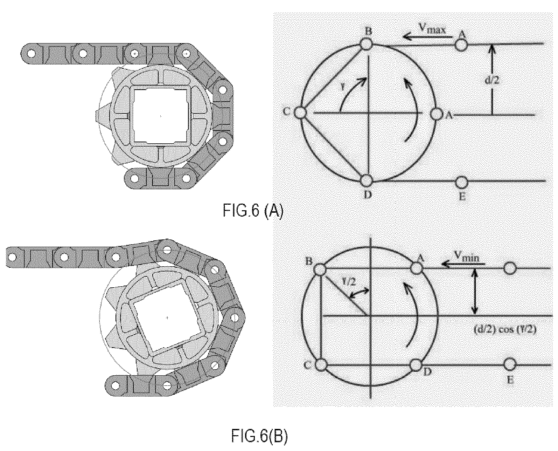

In short, given the indicated system and method, all possible errors are eliminated, since the measurements are always made with respect to the same module 11, although that which has come to be known as the *polygonal effect,* shown in figure 6, must be considered to improve precision.

This effect occurs in all modular belt systems, occurring in the gear 2 when the belt 1 is pulled, generating a polygon (as best seen in figure 6(B)). Due to this effect, the linear speed is not constant, there being a maximum speed and a minimum speed, which depends on the position at which the module 11 is located when engaging in the gear. In other words, the speed is variable, there being positive and negative acceleration. This effect will increase and be more pronounced the fewer teeth the gear 2 has, which translates into fewer sides of the "polygon" and a greater difference in diameters between the inscribed and circumscribed circumference. According to the present invention, by measuring between consecutive and constant reference elements 10, it is possible to easily control for the calculation of the speed and, subsequently, for the calculations of the lengthening and their comparisons with the reference values (i.e., the values taken with the belt 1 without elongation).

Given the described invention, great accuracy in the measurement is obtained, since all the passages and all the measurements are measured in two consecutive modules and at the same time, so that all errors caused by stretching or the polygonal effect are eliminated and/or controlled much more easily.

Furthermore, the cost is very low, since this can be done with simple and robust sensors.

Finally, by having a single measuring device 3, not only are costs, all types of wiring, installations and their consequent precision and maintenance reduced, without losing accuracy and precision, but it should be kept in mind that the belts 1 are placed in factories, where the working circumstances are challenging for this type of devices and measuring elements.

The reference elements 10 can be on the side of the belt 1, on the upper or lower surface and have the shape that is of the greatest interest. This means having them in each of the modules 11 to make measurements on them, where the key is analysing everything in all the passages separately and being able to thoroughly analyse the entire belt 1 in the greatest detail.

In the measuring device 3, if this preferential form is used, a guiding system would be placed so that the reference elements 10 enter the device perfectly positioned and their measurement is the most suitable. In the case of using an infrared or artificial vision sensor, a cleaning system would be introduced in that area so that the reading is not affected by dirt or unwanted particles. In the case of using a magnetic or inductive sensor, it would be ensured that the detections are not interrupted by external distortions. In other words, the invention makes it possible to ensure that the readings are correct in each case, depending on the very idiosyncrasy of the measuring element.

Based on these values and the obtained temperature value, comparing them with the reference values and applying the corresponding formulas, important immediate information will be shown, such as: temperature, linear speed, percentage of resistance that the belt is using at that time, "elongation vs. engagement" with the subsequent prediction of possible gear slips due to excessive load or change due to the service life coming to an end, the need for preventive maintenance to remove rows from the belt so as to provide more tension thereto, and so that it works in optimal conditions for its service life or maximum duration.

## Claims

1. A system for monitoring modular conveyor belts (1) comprising:
a modular conveyor belt (1) comprising a plurality of modules (11, 11', 11", 11‴, 11"") linked together to form a continuous path; and a single passage detecting device (3) comprising a passage detecting sensor (33) and a temperature sensor (34) connected with a signal processing circuit (32);
wherein the modules (11, 11', 11", 11‴, 11"") comprise a plurality of reference elements (10, 10', 10", 10‴, 10ʺʺ), at least one reference element per module; and wherein the reference elements (10, 10', 10", 10‴, 10ʺʺ) are placed equidistant from one another along the entire modular conveyor belt (1); the passage detecting sensor (33) is configured to detect the passage of two consecutive reference elements (10, 10' 10", 10‴, 10"") of each of the modules (11, 11', 11", 11‴, 11ʺʺ);
and wherein the passage detecting sensor (33) is connected with the signal processing circuit (32) comprising at least one processor, a memory, and at least one program stored in the memory and configured to be run by means of the processor; and **characterized in that** the at least one program includes instructions for:
(a) measuring a reference time of passage (T_{P1}, T_{P2}, T_{P3}, T_{P4}) taken with the modular conveyor belt (1) without elongation of each reference element (10) through the passage detecting device (3), and calculating the belt speed (S1) from said time of passage according to the formula S1 = REF/TP3, wherein REF is the known and constant length of the reference element (10);
(b) calculating the time of passage (T_{Pe1}, T_{Pe2}, T_{Pe3}, T_{Pe4}) of each reference element (10, 10', 10", 10‴, 10ʺʺ) with the modular conveyor belt (1) in use, and calculating the actual passage of each module (11, 11', 11", 11‴, 11"") as the product of said belt speed (S1) and said time of passage; and
(c) comparing said time of passage (T_{Pe1}, T_{Pe2}, T_{Pe3}, T_{Pe4}) with the reference time of passage (T_{P1}, T_{P2}, T_{P3}, T_{P4}) taken with the modular conveyor belt (1) without elongation.

2. The system according to claim 1, wherein the temperature sensor (34) is arranged in a position as close as possible to the modular conveyor belt (1) and its gears (2).

3. The system according to any one of claims 1 or 2, wherein the passage detecting device (3) comprises a casing (31).

4. The system according to claim 3, wherein the casing (31) houses two sensors, the passage detecting sensor (33) and the temperature sensor (34).

5. The system according to any one of the preceding claims, wherein the signal processing circuit (32) further comprises a communications receiver-emitter and **characterised in that** the at least one program includes instructions for: (a) conditioning the signals of the passage detecting device (3); b) calculating the time of passage in use (T_{Pe1}, T_{Pe2}, T_{Pe3}, T_{Pe4}) between consecutive pairs of reference elements (10, 10', 10", 10‴, 10ʺʺ) with the modular conveyor belt (1) in use and comparing them with the reference times (T_{P1}, T_{P2}, T_{P3}, T_{P4}) taken with the modular conveyor belt (1) without elongations and measuring a temperature signal (Ta) by means of the temperature sensor (34).

6. The system according to any one of the claims 2-5, wherein the temperature sensor (34) and the passage detecting sensor (33) of the passage detecting device (3) are sensors selected from inductive sensors, capacitive sensors, magnetic sensors, laser sensors, infrared sensors, optical sensors, colour sensors, radiofrequency sensors, ultrasound sensors, artificial vision sensors or any combination thereof.

7. A method for monitoring modular conveyor belts (1) implemented in a system according to any of claims 1 to 6 comprising:
a modular conveyor belt (1) with a plurality of modules (11, 11', 11", 11‴, 11ʺʺ) linked together to form a continuous path; wherein the method further comprises the steps of:
(a) a signal measurement step which in turn comprises:
(a.1) providing the reference time of passage (T_{P1}, T_{P2}, T_{P3}, T_{P4}) corresponding to the modular conveyor belt (1) without elongation;
(a.2) after acquiring the signal from the passage detecting sensor (33), calculating the time of passage (T_{Pe1}, T_{Pe2}, T_{Pe3}, T_{Pe4}) of each reference element (10, 10', 10", 10‴, 10ʺʺ) with the modular conveyor belt (1) in use;
(b) processing the signals received in step (a) and calculating the speed of the modular belt (1) and the lengthening of at least one module (11, 11', 11", 11‴, 11"") of the modular belt (1);
(c) delivering the data measured in step (a) and/or the signal processed in step (b) to an external server; and
(d) instantly displaying all the information relating to the state and prevention of the conveyor belt, on a platform accessible from any mobile and/or fixed device.

8. The method of claim 7, comprising measuring the temperature (Ta) and delivering said information to an external server.

## Patentansprüche

1. System zum Überwachen von modularen Förderbändern (1), umfassend:
ein modulares Förderband (1), das eine Vielzahl von Modulen (11, 11', 11", 11"', 11"") umfasst, die miteinander verbunden sind, um einen durchgehenden Pfad zu bilden; und eine einzelne Durchgangsdetektionsvorrichtung (3), die einen Durchgangsdetektionssensor (33) und einen Temperatursensor (34) umfasst, die an eine Verarbeitungsschaltung (32) angeschlossen sind;
wobei die Module (11, 11', 11", 11'", 11"") eine Vielzahl von Referenzelementen (10, 10', 10", 10'", 10"") umfassen, mindestens ein Referenzelement pro Modul; und wobei die Referenzelemente (10, 10', 10", 10'", 10"") in gleichen Abständen zueinander entlang des gesamten modularen Förderbandes (1) platziert sind; wobei der Durchgangsdetektionssensor (33) dazu konfiguriert ist, die Durchgänge von zwei aufeinanderfolgenden Referenzelementen (10, 10', 10", 10'", 10"") jedes der Module (11, 11', 11", 11'", 11"") zu detektieren;
und wobei der Durchgangsdetektionssensor (33) an die Verarbeitungsschaltung (32) angeschlossen ist, die mindestens einen Prozessor, einen Speicher und mindestens ein Programm umfasst, das im Speicher gespeichert ist und das dazu konfiguriert ist, mittels des Prozessors ausgeführt zu werden; und **dadurch gekennzeichnet, dass** das mindestens eine Programm Anweisungen für Folgendes enthält:
(a) Messen einer Referenzdurchgangszeit (T_{P1}, T_{P2}, T_{P3}, T_{P4}), die mit dem modularen Förderband (1) ohne Dehnung jedes Referenzelements (10) durch die Durchgangsdetektionsvorrichtung (3) ermittelt wird, und Berechnen der Bandgeschwindigkeit (S1) aus dieser Durchgangszeit gemäß der Formel S1 = REF/TP3, wobei REF die bekannte und konstante Länge des Referenzelements (10) ist;
(b) Berechnen der Durchgangszeit (T_{Pe1}, T_{Pe2}, T_{Pe3}, T_{Pe4}) jedes Referenzelements (10, 10', 10", 10'", 10"") mit dem modularen Förderband (1) während der Verwendung und Berechnen des tatsächlichen Durchgangs jedes Moduls (11, 11', 11", 11'", 11"") als das Produkt aus der Bandgeschwindigkeit (S1) und der Durchgangszeit; und
(c) Vergleichen der Durchgangszeit (T_{Pe1}, T_{Pe2}, T_{Pe3}, T_{Pe4}) mit der Referenzdurchgangszeit (T_{P1}, T_{P2}, T_{P3}, T_{P4}), die mit dem modularen Förderband (1) ohne Dehnung ermittelt wird.

2. System nach Anspruch 1, wobei der Temperatursensor (34) an einer Position angeordnet ist, die so nah wie möglich am modularen Förderband (1) und dessen Zahnrädern (2) liegt.

3. System nach einem der Ansprüche 1 oder 2, wobei die Durchgangsdetektionsvorrichtung (3) ein Gehäuse (31) umfasst.

4. System nach Anspruch 3, wobei das Gehäuse (31) zwei Sensoren aufnimmt, den Durchgangsdetektionssensor (33) und den Temperatursensor (34).

5. System nach einem der vorhergehenden Ansprüche, wobei die Signalverarbeitungsschaltung (32) ferner einen Kommunikationsempfänger/- sender umfasst und **dadurch gekennzeichnet ist, dass** das mindestens eine Programm Anweisungen für Folgendes enthält: (a) Aufbereiten der Signale der Durchgangsdetektionsvorrichtung (3); b) Berechnen der Durchgangszeit während der Verwendung (T_{Pe1}, T_{Pe2}, T_{Pe3}, T_{Pe4}) zwischen aufeinanderfolgenden Paaren von Referenzelementen (10, 10', 10", 10'", 10"") während der Verwendung des modularen Förderbandes (1) und deren Vergleich mit den Referenzzeiten (T_{P1}, T_{P2}, T_{P3}, T_{P4}), die mit dem modularen Förderband (1) ohne Dehnungen ermittelt werden, und Messen eines Temperatursignals (Ta) mittels des Temperatursensors (34).

6. System nach einem der Ansprüche 2-5, wobei der Temperatursensor (34) und der Durchgangsdetektionssensor (33) der Durchgangsdetektionsvorrichtung (3) Sensoren sind, die aus induktiven Sensoren, kapazitiven Sensoren, magnetischen Sensoren, Lasersensoren, Infrarotsensoren, optischen Sensoren, Farbsensoren, Hochfrequenzsensoren, Ultraschallsensoren, Sensoren für künstliches Sehen oder einer beliebigen Kombination davon ausgewählt sind.

7. Verfahren zum Überwachen von modularen Förderbändern (1), das in einem System nach einem der Ansprüche 1 bis 6 implementiert ist, umfassend:
ein modulares Förderband (1) mit einer Vielzahl von Modulen (11, 11', 11", 11"', 11""), die miteinander verbunden sind, um einen durchgehenden Pfad zu bilden;
wobei das Verfahren ferner die folgenden Schritte umfasst:
(a) einen Signalmessschritt, der seinerseits Folgendes umfasst:
(a.1) Bereitstellen der Referenzdurchgangszeit (T_{P1}, T_{P2}, T_{P3}, T_{P4}), die dem modularen Förderband (1) ohne Dehnung entspricht;
(a.2) nach dem Erfassen des Signals vom Durchgangsdetektionssensor (33), Berechnen der Durchgangszeit (T_{Pe1}, T_{Pe2}, T_{Pe3}, T_{Pe4}) jedes Referenzelements (10, 10', 10", 10'", 10"") während der Verwendung des modularen Förderbands (1);
(b) Verarbeiten der in Schritt (a) empfangenen Signale und Berechnen der Geschwindigkeit des modularen Bandes (1) und der Verlängerung mindestens eines Moduls (11, 11', 11", 11"', 11"") des modularen Bandes (1);
(c) Übermitteln der in Schritt (a) gemessenen Daten und/oder des in Schritt (b) verarbeiteten Signals an einen externen Server; und
(d) sofortiges Anzeigen aller Informationen über den Zustand und die Prävention des Förderbands auf einer Plattform, auf die von jedem mobilen und/oder jeder ortsfesten Vorrichtung zugegriffen werden kann.

8. Verfahren nach Anspruch 7, umfassend das Messen der Temperatur (Ta) und das Übermitteln der Informationen an einen externen Server.

## Revendications

1. Système de surveillance de bandes transporteuses modulaires (1) comprenant :
une bande transporteuse modulaire (1) comprenant une pluralité de modules (11, 11', 11", 11"', 11"") reliés entre eux pour former un chemin continu ; et un dispositif de détection de passage unique (3) comprenant un capteur de détection de passage (33) et un capteur de température (34) connectés à un circuit de traitement de signal (32) ;
dans lequel les modules (11, 11', 11", 11'", 11"") comprennent une pluralité d'éléments de référence (10, 10', 10", 10‴, 10ʺʺ), au moins un élément de référence par module ; et dans lequel les éléments de référence (10, 10', 10", 10‴, 10ʺʺ) sont placés à égale distance les uns des autres le long de l'ensemble de la bande transporteuse modulaire (1) ; le capteur de détection de passage (33) est configuré pour détecter le passage de deux éléments de référence consécutifs (10, 10', 10", 10'", 10"") de chacun des modules (11, 11', 11", 11'", 11"") ;
et dans lequel le capteur de détection de passage (33) est connecté au circuit de traitement du signal (32) comprenant au moins un processeur, une mémoire, et au moins un programme stocké dans la mémoire et configuré pour être exécuté au moyen du processeur ; et **caractérisé en ce que** l'au moins un programme comprend des instructions pour :
(a) mesurer un temps de passage de référence (T _{P1}, T _{P2}, T _{P3}, T _{P4}) pris avec la bande transporteuse modulaire (1) sans allongement de chaque élément de référence (10) à travers le dispositif de détection de passage (3), et calculer la vitesse de bande (S1) à partir dudit temps de passage selon la formule S1 = REF/TP3, dans laquelle REF est la longueur connue et constante de l'élément de référence (10) ;
(b) calculer le temps de passage (T_{Pe1}, T_{Pe2}, T_{Pe3}, T_{Pe4}) de chaque élément de référence (10, 10', 10", 10'", 10"") avec la bande transporteuse modulaire (1) en cours d'utilisation, et calculer le passage réel de chaque module (11, 11', 11", 11'", 11"") comme étant le produit de ladite vitesse de bande (S1) et dudit temps de passage ; et
(c) comparer ledit temps de passage (T_{Pe1}, T_{Pe2}, T_{Pe3}, T_{Pe4}) avec le temps de passage de référence (T _{P1}, T _{P2}, T _{P3}, T _{P4}) mesuré avec la bande transporteuse modulaire (1) sans allongement.

2. Système selon la revendication 1, dans lequel le capteur de température (34) est agencé dans une position aussi proche que possible de la bande transporteuse modulaire (1) et de ses engrenages (2).

3. Système selon l'une quelconque des revendications 1 ou 2, dans lequel le dispositif de détection de passage (3) comprend un boîtier (31).

4. Système selon la revendication 3, dans lequel le boîtier (31) loge deux capteurs, le capteur de détection de passage (33) et le capteur de température (34).

5. Système selon l'une quelconque des revendications précédentes, dans lequel le circuit de traitement de signal (32) comprend en outre un récepteur-émetteur de communication et **caractérisé en ce que** l'au moins un programme comporte des instructions pour : (a) conditionner les signaux du dispositif de détection de passage (3) ; b) calculer le temps de passage en cours d'utilisation (T_{Pe1}, T_{Pe2}, T_{Pe3}, T_{Pe4}) entre des paires consécutives d'éléments de référence (10, 10', 10", 10"', 10"") avec la bande transporteuse modulaire (1) en cours d'utilisation et les comparer aux temps de référence (T _{P1}, T _{P2}, T _{P3}, T _{P4}) pris avec la bande transporteuse modulaire (1) sans allongements et mesurer un signal de température (Ta) au moyen du capteur de température (34).

6. Système selon l'une quelconque des revendications 2 à 5, dans lequel le capteur de température (34) et le capteur de détection de passage (33) du dispositif de détection de passage (3) sont des capteurs choisis parmi des capteurs inductifs, des capteurs capacitifs, des capteurs magnétiques, des capteurs laser, des capteurs infrarouges, des capteurs optiques, des capteurs de couleur, des capteurs radiofréquence, des capteurs à ultrasons, des capteurs de vision artificielle ou l'une quelconque combinaison de ceux-ci.

7. Procédé de surveillance de bandes transporteuses modulaires (1) mis en œuvre dans un système selon l'une quelconque des revendications 1 à 6 comprenant :
une bande transporteuse modulaire (1) avec une pluralité de modules (11, 11', 11", 11'", 11"") reliés entre eux pour former un chemin continu ; dans lequel le procédé comprend en outre les étapes suivantes :
(a) une étape de mesure de signal qui comprend à son tour :
(a.1) la fourniture du temps de passage de référence (T _{P1}, T _{P2}, T _{P3}, T _{P4}) correspondant à la bande transporteuse modulaire (1) sans allongement ;
(a.2) après acquisition du signal du capteur de détection de passage (33), calculer le temps de passage (T _{Pe1}, T _{Pe2}, T _{Pe3}, T _{Pe4}) de chaque élément de référence (10, 10', 10", 10'", 10"") avec la bande transporteuse modulaire (1) en cours d'utilisation ;
(b) le traitement des signaux reçus à l'étape (a) et le calcul de la vitesse de la bande modulaire (1) et l'allongement d'au moins un module (11, 11', 11", 11'", 11"") de la bande modulaire (1) ;
(c) la transmission des données mesurées à l'étape (a) et/ou du signal traité à l'étape (b) à un serveur externe ; et
(d) l'affichage instantané de toutes les informations relatives à l'état et à la prévention de la bande transporteuse, sur une plateforme accessible depuis tout dispositif mobile et/ou fixe.

8. Procédé selon la revendication 7, comprenant la mesure de la température (Ta) et la transmission desdites informations à un serveur externe.
